# EUROPEAN PATENT SPECIFICATION

(11) **EP 3 309 217 B1**
(45) Date of publication and mention of the grant of the patent: **06.04.2022**
(21) Application number: 16806805.4
(22) Date of filing: 07.06.2016
(51) Int. Cl.: C08L 69/00, C08L 55/02, C08L 27/18, C08L 51/04, C08K 13/02, C08K 3/10, C08K 5/5415, C08K 5/523, C08L 33/00

(54) **POLYCARBONATE COMPOSITION AND PREPARATION METHOD THEREFOR**
POLYCARBONATZUSAMMENSETZUNG UND HERSTELLUNGSVERFAHREN DAFÜR
COMPOSITION DE POLYCARBONATE ET SON PROCÉDÉ DE PRÉPARATION

(30) Priority: 09.06.2015 CN 201510310060
(43) Date of publication of application: 18.04.2018
(73) Proprietor: Kingfa Sci. & Tech. Co., Ltd., Guangzhou, Guangdong 510663 (CN)
(72) Inventor: GUO, Tanghua, Guangzhou Guangdong 510663 (CN); CEN, Yin, Guangzhou Guangdong 510663 (CN); TONG, Wei, Guangzhou Guangdong 510663 (CN); AI, Junwei, Guangzhou Guangdong 510663 (CN); LI, Mingkun, Guangzhou Guangdong 510663 (CN); HE, Jihui, Guangzhou Guangdong 510663 (CN); SUN, Donghai, Guangzhou Guangdong 510663 (CN)
(74) Representative: Petraz, Gilberto Luigi
(86) International application number: PCT/CN2016/085089
(87) International publication number: WO 2016/197907

(56) References cited:
- EP-A1- 1 865 028
- CN-A- 101 429 331
- CN-A- 101 591 468
- CN-A- 101 993 586
- CN-A- 102 516 732
- CN-A- 104 419 171
- CN-A- 104 629 285
- CN-A- 104 877 330
- CN-A- 104 987 688
- CN-A- 104 987 691
- CN-A- 105 440 624
- US-A1- 2013 289 192
- US-A1- 2014 275 382
- US-B1- 6 417 319

## Description

### TECHNICAL FIELD

The present invention relates to the technical field of engineering plastics, and particularly relates to a polycarbonate composition and a preparation method thereof.

### BACKGROUND

Polycarbonate PC has properties such as relatively high impact resistance and heat resistance; and to improve its processability and overcome a disadvantage of being sensitive to a notch impact, rubber modified polymers such as ABS, MBS and the like may generally be added. Particularly, a PC/ABS alloy having PC and ABS as main raw materials is an important engineering plastic, which may synthesize excellent properties of the both, thereby enhancing a physical property and the processability; however, various metal ions may be introduced due to addition of various aids and inorganic fillers, which may cause hidden troubles about long-term thermal-oxidative aging property and weathering property, particularly for occasions with relatively high requirements for an operating environment.

Patent US 20130289177 A1 discloses a composition characterized by selectively using a low lithium-ion content and a specified sodium-ion and/or potassium-ion content which exceeds the lowest level and preferably does not exceed the highest level, which shows improved hydrolysis resistance, but does not mention other weathering properties.

Document US-A-2014/275382 discloses blended thermoplastic polymer compositions comprising recycled acrylonitrile-butadiene-styrene (ABS) polymer or recycled polystyrene polymer which contain at least one impurity and an acid melt flow stabilizer.

Document US-A-2013/289192 discloses moulding compositions comprising polycarbonate and acrylonitrile-butadiene-styrene polymer (ABS) as well as optionally further additives and components.

Document US-B-6,417,319 discloses a flame retardant polycarbonate resin composition comprising an aromatic polycarbonate having an average molecular weight of from 12000 to 25000, a styrene-acrylonitrile-butyl acrylate copolymer having a butyl acrylate unit content of from 1 to 30% by weight, a complex rubber graft copolymer obtained by a process comprising graft-polymerizing at least one graft-polymerizable monomer onto a complex rubber comprising a polyorganosiloxane and a polyalkyl (meth)acrylate, a phosphoric ester, and a tetrafluoroethylene polymer.

Until now, no influences of a total compounding amount of a transition element and an alkaline earth metal and a compounding molar ratio of the transition element to the alkaline earth metal on the long-term thermal-oxidative aging property and the weathering property of the polycarbonate composition have been reported.

With a result of extensive experiments, the inventor surprisingly has found that, the long-term thermal-oxidative aging property and the weathering property of the polycarbonate composition can be significantly improved when the total compounding amount of the transition element and the alkaline earth metal, which are added in a polycarbonate composition formula, based on a total weight of the polycarbonate composition is greater than or equal to 10 ppm and less than or equal to 600 ppm and the compounding molar ratio of the transition element to the alkaline earth metal is adjusted to 0.1-1; and the polycarbonate composition is particularly suitable for occasions with relatively high requirements for the operating environment.

### SUMMARY OF THE INVENTION

To overcome disadvantages and shortcomings of the prior art, a primary object of the present invention is to provide a polycarbonate composition having a good flowability, a high glossiness, and a color stability before and after long-term thermal-oxidative aging.

Another object of the present invention is to provide a preparation method of the above-described polycarbonate composition.

A polycarbonate composition according to present invention includes the following components in parts by weight:
a. 35-75 parts of a polycarbonate;
b. 8-35 parts of a graft copolymer;
c. 5-25 parts of a fire retardant; and
d. 0-10 parts of other aids;
wherein a sum of parts by weight of the four components a, b, c, and d is 100;
a total compounding amount of a transition element and an alkaline earth metal based on a total weight of the polycarbonate composition is greater than or equal to 10 ppm and less than or equal to 600 ppm, and a compounding molar ratio of the transition element to the alkaline earth metal is 0.1-1.

Wherein, a testing method of a content of the transition metal: ICP-MS standard mixture method.

A testing method of a content of the alkaline earth metal: ICP-MS standard mixture method.

Preferably, the total compounding amount of the transition element and the alkaline earth metal based on the total weight of the polycarbonate composition is greater than or equal to 50 ppm and less than or equal to 500 ppm, further preferably greater than or equal to 70 ppm and less than or equal to 400 ppm.

Preferably, the compounding molar ratio of the transition element to the alkaline earth metal is 0.2-0.8, preferably 0.3-0.6.

Wherein, the transition element is selected from Fe and/or Mn; and the alkaline earth metal is selected from Mg and/or Ca.

When the compounding molar ratio of the transition element to the alkaline earth metal is less than 0.1 or greater than 1, the polycarbonate composition is poor in flowability during processing, which causes a result that a product is easily susceptible to appearance defect, poor glossiness, and poor weathering property.

Wherein, the polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate.

Preferably, the aromatic polycarbonate is an aromatic polycarbonate with a viscosity-average molecular weight of 13000-40000, more preferably an aromatic polycarbonate with a viscosity-average molecular weight of 16000-28000. When the viscosity-average molecular weight is within the above-described range, a mechanical strength is superior, and an excellent moldability can be maintained. Wherein, the viscosity-average molecular weight is calculated by testing a viscosity of a solution at 25 °C by using dichloromethane as a solvent.

The above-described polycarbonate may be prepared by an interfacial polymerization method and an ester-interchange method, and a content of a terminal hydroxy group can be controlled in the process.

Wherein, the graft copolymer is selected from one or more of a graft copolymer prepared from an alkaline earth metal salt by using an emulsion polymerization method, a graft copolymer prepared from an alkaline earth metal salt by using a bulk polymerization method, and a graft copolymer prepared from an alkaline earth metal salt by using a bulk-suspension polymerization method, preferably the graft copolymer prepared from the alkaline earth metal salt by using the emulsion polymerization method.

The bulk polymerization method includes five steps: dissolving, prepolymerizing, polymerizing, devolatilizing and pelletizing, which more particularly are: dissolving a rubber in ethylbenzene and styrene; adding monomers in accordance with a formulation amount to prepare into a raw material solution, inputting the prepared raw material solution into a prepolymerizer to perform prepolymerization; during polymerizing, grafting the monomers to the rubber, copolymerizing the monomers at the same time, separating from the solution, forming a discontinuous phase dispersed in a continuous phase in the raw material solution, whereby after enough monomers are polymerized, a copolymer in the discontinuous phase becomes a continuous phase, and the grafted rubber forms a discontinuous phase, and the discontinuous phase is dispersed in the continuous copolymer phase, thereby accomplishing a phase transition; finally, performing further polymerization, vacuum degassing, extruding, cooling and pelletizing to obtain a final product.

The bulk-suspension polymerization method comprises: regulating a rubber and monomer solution in accordance with a formula, and adding a polymerization regulator and a radical initiator at the same time; performing bulk polymerization on a monomer mixture at 80 °C-120 °C, continuously stirring during polymerizing, and adding deionized water and a suspending agent into the mixture to ensure that the mixture is dispersed; and then performing suspension polymerization by using a radical catalyst, performing coagulating, filtering, washing, dehydrating and drying after obtaining a certain polymerization degree, and then pelletizing to obtain a product.

The emulsion polymerization method comprises: grafting a rubber by controlling a polymerization temperature at 50 °C-80 °C, and adding a monomer mixture into a rubber latex in the presence of an initiator, deionized water, an emulsifier and a cross-linking agent, and finally pelletizing after performing washing, dehydrating and drying to obtain a product.

Wherein, the graft copolymer is selected from the following graft copolymers containing b.1 on b.2 in parts by weight:
b.1 5-95 parts of a mixture of b.1.1 and b.1.2:
   b.1.1 50-95 parts of one or more of styrene, styrene derivatives such as α-methyl styrene, p-benzyl styrene, and divinyl styrene, C1-C8 alkyl methacrylate, C1-C8 alkyl acrylate, dimethyl siloxane, phenyl siloxane, and multi-alkyl siloxane;
   b.1.2 5-50 parts of one or more of acrylonitrile, methyl acrylonitrile, C1-C8 alkyl methacrylate, and C1-C8 alkyl acrylate;
b.2 5-95 parts of one or more of polybutadiene, polyisoprene, a random copolymer and block copolymer of styrene-butadiene, a random copolymer and block copolymer of acrylonitrile-butadiene, a copolymer of polybutadiene and polyisoprene, a copolymer of ethylene and α-alkene, a copolymer of ethylene and α-unsaturated carboxylate, a terpolymer of ethylene-propene-nonconjugated diene, an acryloyl rubber, and an organic siloxane rubber.

More preferably, the graft copolymer is selected from one or more of a copolymer of acrylonitrile-styrene AS, a copolymer of acrylonitrile-butadiene-styrene graft ABS, a copolymer of methyl methacrylate-acrylonitrile-butadiene-styrene MABS, a terpolymer of acrylonitrile-styrene-propenoic acid ASA, and a graft copolymer of methyl methacrylate-butadiene-styrene MBS; wherein, a particle diameter of the MBS is preferably 0.1 µm-0.5 µm, a particle diameter of the ABS in the bulk polymerization method is preferably 0.1 µm-2 µm, and a particle diameter of the ABS in the emulsion polymerization method is preferably 0.05 µm-0.2 µm.

Further preferred is the graft copolymer of acrylonitrile-butadiene-styrene ABS, wherein a percentage by weight of a butadiene rubber polymer in the ABS is 5 wt %-50 wt %, a particle diameter distribution can be a uniform distribution or a multi-distribution with two or more peak values.

Wherein, the fire retardant is selected from a halogen-based fire retardant or a halogen-free fire retardant, preferably the halogen-free fire retardant; the halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl oxide, decabromodiphenyl, a brominated polycarbonate, perbromotricyclopentadecane or a brominated aromatic crosslinked polymer, preferably the brominated polystyrene; the halogen-free fire retardant is selected from one or more of a nitrogen-containing fire retardant, a phosphorus-containing fire retardant or a nitrogen- and phosphorus-containing fire retardant, preferably the phosphorus-containing fire retardant.

Preferably, the phosphorus-containing fire retardant is selected from one or more of triphenyl phosphate, tritolyl phosphate, tolyl diphenyl phosphate, trixylyl phosphate, tri(2,4,6-trimethyl phenyl) phosphate, tri(2,4-di-tert-butyl phenyl) phosphate, tri(2,6-di-tert-butyl phenyl) phosphate, resorcinol bis(diphenyl phosphate), hydroquinone bis(diphenyl phosphate), bisphenol A-bis(diphenyl phosphate), resorcinol bis(2,6-di-tert-butyl phenyl phosphate), and hydroquinone bis(2,6-dimethyl phenyl phosphate).

The polycarbonate composition may further contain other aids, for example, selected from one or more of a heat stabilizer, an antioxidant, an anti-dripping agent, a lubricant, a releasing agent, a light stabilizer, a plasticizer, a filler, and a colorant.

The suitable thermal stabilizer includes an organic phosphite such as triphenyl phosphite, tri(2,6-dimethyl phenyl) phosphite, and tri(nonyl phenyl) phosphite, dimethyl phenyl phosphonate, and trimethyl phosphate.

The suitable antioxidant includes an organic phosphite, an alkylated monophenol or polyphenol, an alkylated reaction product of a polyphenol and a diene, a butylated reaction product of p-cresol or dicyclopentadiene, alkylated hydroquinones, hydroxylated thiodiphenyl ethers, alkylene-bisphenol, benzyl compounds, and polyol esters.

The suitable anti-dripping agent is preferably selected from a fluorated polyolefin, and the fluorated polyolefin is well known (referring to EP-A 640 655, for example). Commercially preferred products are, for example, derived from Teflon^{®} 30 N of DuPont.

The suitable lubricant is selected from PEP-36 (bis(2,6-di-tert-butyl-4-methyl phenyl) pentaerythritol diphosphate) and the like.

The suitable light stabilizer includes one or combinations of benzotriazoles and benzophenones.

The suitable plasticizer is phthalate.

The suitable releasing agent includes metal stearates, alkyl stearates, pentaerythritol stearates, paraffin, lignite wax, and the like.

The suitable filler includes titanium dioxide, talc powder, mica and barium sulfate. The suitable colorant includes various pigments, and dyes.

A preparation method of the above-described polycarbonate composition includes the following steps:
(1) formulating a compound containing a transition element and a phenyl siloxane into a phenyl siloxane solution of a mass fraction of 0.15 ppm-600 ppm; wherein the transition element is selected from Fe and/or Mn;
(2) blending the phenyl siloxane solution and a polycarbonate in a high-speed mixer to obtain a pretreated polycarbonate;
(3) after weighing the pretreated polycarbonate, a graft copolymer prepared from an alkaline earth metal salt by using an emulsion polymerization method, a fire retardant, and other aids in proportion, blending by the high-speed mixer or a mixer, extruding, cooling by means of water, and pelletizing to obtain a columnar particulate polycarbonate composition; wherein the alkaline earth metal is selected from Mg and/or Ca.

Because the polycarbonate composition of the present invention has an excellent long-term heat stability and weathering property, no appearance defects and excellent mechanical property, the polycarbonate composition of the present invention can be used for outdoor and indoor application fields, for example shell parts of various types and sizes, household appliances such as a TV set, a printer, a modem shell, and a display shell, or automobile parts for outdoor use, an enclosure or a cover in a building field, and a housing and a frame for an electrical appliance.

Compared with the prior art, the present invention has the following advantageous effects:
according to the present invention, a long-term thermal-oxidative aging property and a weathering property of the polycarbonate composition can be significantly improved when a total compounding amount of a transition element and an alkaline earth metal, which are added in a polycarbonate composition formula, based on a total weight of the polycarbonate composition does not exceed 600 ppm and a compounding molar ratio of the transition element to the alkaline earth metal is adjusted to 0.1-1; and the polycarbonate composition is particularly suitable for occasions with relatively high requirements for an operating environment.

### DETAILED DESCRIPTION OF THE PREFERRED EMBODIMENT

The present invention will be further described below by detailed implementations, the following embodiments are preferred implementations of the present invention, but the implementations of the present invention are not limited by the following embodiments.

Testing standards or methods of various properties:
a testing method of a content of a transition metal: ICP-MS standard mixture method;
a testing method of a content of an alkaline earth metal: ICP-MS standard mixture method;
a determining method of a change in color difference in a UV aging property (150 h): ISO4982 color difference contrast;
a determining method of a 150 °C impact property retention rate (0 h, 150 h): TSO 180, energy 2.75 J;
a determining method of a glossiness: in accordance with GB/T 1743-1979, testing the glossiness of a standard color plate by using a glossiness testing meter, and selecting a reading at an angle of 85°.

A polycarbonate used in the present invention comprises:
a component a-1: PC 1300-10 (LG, Korea); and
a component a-2: PC 1225 (Teijin, Japan).

A graft copolymer used in the present invention comprises:
a component b-1: ABS1 Emulsion method 757 (Chi Mei, Taiwan);
a component b-2: ABS2 Bulk method 8391 (Gaoqiao, Shanghai); and
a component b-3: MBS EM500 (LG, Korea).

A transition element used in the present invention comprises:
Fe: Iron & Steel Research Institute, a standard solution; and
Mn: Iron & Steel Research Institute, a standard solution.

An alkaline earth metal used in the present invention comprises:
Mg: Iron & Steel Research Institute, a standard solution; and
Ca: Iron & Steel Research Institute, a standard solution.

A fire retardant used in the present invention comprises:
a component c: BDP, bisphenol A-bis(diphenyl phosphate) (ADEKA).

Other aids used in the present invention comprises:
a component d-1: AO1076: n-octadecyl β-(3,5-di-tert-butyl-4-hydroxy phenyl) propionate CAS NO.: [2082-79-3]), as an antioxidant;
a component d-2: PEP-36 (bis(2,6-di-tert-butyl-4-methyl phenyl) pentaerythritol diphosphate), as a lubricant; and
a component d-3: PTFE (polytetrafluoroethylene), as an anti-dripping agent.

### EMBODIMENTS 1-15 and COMPARATIVE EXAMPLES 1-9: Preparation of a Polycarbonate Composition

Formulating a compound containing a transition element and a phenyl siloxane into a phenyl siloxane solution of a mass fraction of 0.15 ppm-600 ppm, wherein the transition element is selected from Fe and/or Mn; blending the phenyl siloxane solution and a polycarbonate in a high-speed mixer to obtain a pretreated polycarbonate; after weighing the pretreated polycarbonate, a graft copolymer prepared from an alkaline earth metal salt by using an emulsion polymerization method , a fire retardant, and other aids in proportion in accordance with a formula in Table 1, blending by the high-speed mixer or a mixer, extruding, cooling by means of water, and pelletizing to obtain a columnar particulate polycarbonate composition; wherein the alkaline earth metal is selected from Mg and/or Ca; the 150 °C impact property retention rate (0 h, 150 h) and the change in the color difference in the UV aging property (150 h) of the polycarbonate composition were tested, and the data were listed in Table 1.

**Table 1 Specific proportion (parts by weight) and other property testing results in Embodiments 1-15 and Comparative Examples 1-9**

| | Emb odi men t1 | Emb odi men t2 | Emb odi men t3 | Emb odi men t4 | Emb odi men t5 | Emb odi men t6 | Emb odi men t7 | Emb odi men t8 | Emb odi men t9 | Emb odi men t10 | Emb odi men t11 | Emb odi men t 12 | Emb odi men t13 | Emb odi men t 14 | Emb odi men t15 |
|---|---|---|---|---|---|---|---|---|---|---|---|---|---|---|---|
| compo nent a-1 | 30 | 64 | 80 | | | 80 | 30 | | | | | 80 | 30 | | |
| compo nent a-2 | | | | 30 | 64 | | | 64 | 80 | 30 | 64 | | | 64 | 80 |
| compo nent b-1 | 50 | | 8 | | | | 50 | | 8 | | | | 50 | | 8 |
| compo nent b-2 | | | | 50 | | 8 | | | | 50 | | 8 | | | |
| compo nent b-3 | | 20 | | | 20 | | | 20 | | | 20 | | | 20 | |
| compo nent c | 19 | 15 | 11 | 19 | 15 | 11 | 19 | 15 | 11 | 19 | 15 | 11 | 19 | 15 | 11 |
| compo nent d-1 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| compo nent d-2 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| compo nent d-3 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| content of transiti on element (ppm) | 160 | 10 | 210 | 120 | 20 | 180 | 40 | 60 | 120 | 180 | 7 | 40 | 160 | 20 | 90 |
| content of alkaline earth metal (ppm) | 400 | 20 | 350 | 300 | 40 | 300 | 100 | 120 | 200 | 180 | 63 | 200 | 200 | 50 | 150 |
| 150°C impact propert y retentio n rate (0h. %) | 100 | 100 | 100 | 100 | 100 | 100 | 100 | 100 | 100 | 100 | 100 | 100 | 100 | 100 | 100 % |
| 150°C impact propert y retentio n rate (500h, %) | 65 | 77 | 85 | 68 | 79 | 87 | 69 | 81 | 90 | 69 | 68 | 80 | 82 | 92 | 91% |
| change in color differen ce in UV aging propert y (500h) | 10 | 6 | 3 | 8 | 5 | 2 | 7 | 4 | 1 | 8 | 7 | 4 | 3 | 1 | 1 |
| glossin ess (85°) | 84 | 92 | 96 | 87 | 94 | 98 | 89 | 96 | 101 | 87 | 88 | 93 | 95 | 103 | 102 |

**Continued- Table 1**

| | Compa rative Example 1 | Compa rative Example 2 | Compa rative Example 3 | Compa rative Example 4 | Compa rative Example 5 | Compa rative Example 6 | Compa rative Example 7 | Compa rative Example 8 | Compa rative Example 9 |
|---|---|---|---|---|---|---|---|---|---|
| component a-1 | 30 | 64 | 80 | | | 80 | 30 | | |
| component a-2 | | | | 30 | 64 | | | 64 | 80 |
| component b-1 | 50 | | 8 | | | | 50 | | 8 |
| component b-2 | | | | 50 | | 8 | | | |
| component b-3 | | 20 | | | 20 | | | 20 | |
| component c | 19 | 15 | 11 | 19 | 15 | 11 | 19 | 15 | 11 |
| component d-1 | 0.2 | 0.2 | 0.2 | 0.2 | 0.2 | 0.2 | 0.2 | 0.2 | 0.2 |
| component d-2 | 0.3 | 0.3 | 0.3 | 0.3 | 0.3 | 0.3 | 0.3 | 0.3 | 0.3 |
| component d-3 | 0.5 | 0.5 | 0.5 | 0.5 | 0.5 | 0.5 | 0.5 | 0.5 | 0.5 |
| content of transition element (ppm) | 0 | 30 | 300 | 200 | 240 | 240 | 100 | 120 | 320 |
| content of alkaline earth metal (ppm) | 560 | 0 | 500 | 500 | 480 | 400 | 40 | 60 | 0 |
| 150°C impact property retention rate (0h. %) | 100 | 100 | 100 | 100 | 100 | 100 | 100 | 100 | 100 |
| 150°C impact property retention rate (500h, %) | 30 | 44 | 12 | 23 | 32 | 21 | 27 | 15 | 33 |
| change in color difference in UV aging property (500h) | 50 | 32 | 27 | 14 | 22 | 21 | 34 | 33 | 20 |
| glossiness (85°) | 60 | 55 | 47 | 46 | 52 | 45 | 49 | 33 | 50 |

It may be seen from a comparison of Embodiments with Comparative Examples in Table 1 that, a long-term thermal-oxidative aging property and a weathering property of the polycarbonate composition can be significantly improved when the total compounding amount of the transition element and the alkaline earth metal, which are added in a polycarbonate composition formula, based on the total weight of the polycarbonate composition is greater than or equal to 10 ppm and less than or equal to 600 ppm and the compounding molar ratio of the transition element to the alkaline earth metal is adjusted to 0.1-1; and the polycarbonate composition is particularly suitable for occasions with relatively high requirements for an operating environment.

## Claims

1. A polycarbonate composition, comprising the following components in parts by weight:
a. 35-75 parts of the polycarbonate;
b. 8-35 parts of the graft copolymer;
c. 5-25 parts of the fire retardant; and
d. 0-10 parts of other aids;
wherein a sum of parts by weight of the four components a, b, c, and d is 100;
a total compounding amount of a transition element and an alkaline earth metal based on a total weight of the polycarbonate composition is greater than or equal to 10 ppm and less than or equal to 600 ppm, wherein the content of the transition metal and the content of the alkaline earth metal are measured as indicated in the description, and a compounding molar ratio of the transition
element to the alkaline earth metal is 0.1-1.

2. The polycarbonate composition according to claim 1, wherein the total compounding amount of the transition element and the alkaline earth metal based on a total weight of the polycarbonate composition is greater than or equal to 50 ppm and less than or equal to 500 ppm, preferably greater than or equal to 70 ppm and less than or equal to 400 ppm.

3. The polycarbonate composition according to claim 1, wherein the compounding molar ratio of the transition element to the alkaline earth metal is 0.2-0.8; preferably 0.3-0.6.

4. The polycarbonate composition according to any of claims 1 to 3, wherein the transition element is selected from Fe and/or Mn; and the alkaline earth metal is selected from Mg and/or Ca.

5. The polycarbonate composition according to claim 1, wherein the polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate.

6. The polycarbonate composition according to claim 5, wherein the aromatic polycarbonate is an aromatic polycarbonate with a viscosity-average molecular weight of 13000-40000, preferably an aromatic polycarbonate with a viscosity-average molecular weight of 16000-28000 , wherein the viscosity-average molecular weight is determined as indicated in the description.

7. The polycarbonate composition according to claim 1, wherein the graft copolymer is selected from one or more of a graft copolymer prepared from an alkaline earth metal salt by using an emulsion polymerization method, a graft copolymer prepared from an alkaline earth metal salt by using a bulk polymerization method, and a graft copolymer prepared from an alkaline earth metal salt by using a bulk-suspension polymerization method, preferably the graft copolymer prepared from the alkaline earth metal salt by using the emulsion polymerization method.

8. The polycarbonate composition according to claim 1, wherein the graft copolymer is selected from graft copolymers containing the following b.1 on b.2 in parts by weight:
b.1 5-95 parts of a mixture of b.1.1 and b.1.2:
b.1.1 50-95 parts of one or more of styrene, styrene derivatives such as α-methyl styrene, p-benzyl styrene, and divinyl styrene, a C1-C8 alkyl methacrylate, a C1-C8 alkyl acrylate, dimethyl siloxane, phenyl siloxane, and multi-alkyl siloxane;
b.1.2 5-50 parts of one or more of acrylonitrile, methyl acrylonitrile, a C1-C8 alkyl methacrylate, and a C1-C8 alkyl acrylate;
b.2 5-95 parts of one or more of polybutadiene, polyisoprene, a random copolymer and block copolymer of styrene-butadiene, a random copolymer and block copolymer of acrylonitrile-butadiene, a copolymer of polybutadiene and polyisoprene, a copolymer of ethylene and α-alkene, a copolymer of ethylene and α-unsaturated carboxylate, a terpolymer of ethylene-propene-nonconjugated diene, an acryloyl rubber, and an organic siloxane rubber.

9. The polycarbonate composition according to claim 8, wherein the graft copolymer is selected from one or more of a copolymer of acrylonitrile-styrene AS, a graft copolymer of acrylonitrile-butadiene-styrene ABS, a copolymer of methyl methacrylate-acrylonitrile-butadiene-styrene MABS, a terpolymer of acrylonitrile-styrene-propenoic acid ASA, and a graft copolymer of methyl methacrylate-butadiene-styrene MBS, preferably the graft copolymer of acrylonitrile-butadiene-styrene ABS; wherein a particle diameter of the MBS is preferably 0.1 µm-0.5 µm, a particle diameter of the ABS in a bulk polymerization method is preferably 0.1 µm-2 µm, and a particle diameter of the ABS in a emulsion polymerization method is preferably 0.05 µm-0.2 µm.

10. The polycarbonate composition according to claim 1, wherein the fire retardant is selected from one or more of a halogen-based fire retardant or a halogen-free fire retardant, preferably the halogen-free fire retardant; the halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl oxide, decabromodiphenyl, a brominated polycarbonate, perbromotricyclopentadecane or a brominated aromatic crosslinked polymer, preferably the brominated polystyrene; the halogen-free fire retardant is selected from one or more of a nitrogen-containing fire retardant, a phosphorus-containing tire retardant, and a nitrogen- and phosphorus-containing fire retardant, preferably the phosphorus-containing fire retardant.

11. The polycarbonate composition according to claim 10, wherein the phosphorus-containing fire retardant is selected from one or more of diphenyl phosphate, tritolyl phosphate, tolyl diphenyl phosphate, trixylyl phosphate, tri(2,4,6-trimethyl phenyl) phosphate, tri(2,4-di-tert-butyl phenyl) phosphate, tri(2,6-di-tert-butyl phenyl) phosphate, resorcinol bis(diphenyl phosphate), hydroquinone bis(diphenyl phosphate), bisphenol A-bis(diphenyl phosphate), resorcinol bis(2,6-di-tert-butyl phenyl phosphate), and hydroquinone bis(2,6-dimethyl phenyl phosphate).

12. The polycarbonate composition according to claim 1, wherein other aids of the component d is selected from one or more of a heat stabilizer, an antioxidant, an anti-dripping agent, a lubricant, a releasing agent, a light stabilizer, a plasticizer, a filler, and a colorant.

13. A preparation method of the polycarbonate composition according to any of claims 1 to 12, comprising the following steps:
(1) formulating a compound containing a transition element and a phenyl siloxane into a phenyl siloxane solution of a mass fraction of 0.15 ppm-600 ppm, wherein the transition element is selected from Fe and/or Mn;
(2) blending the phenyl siloxane solution and a polycarbonate in a high-speed mixer to obtain a pretreated polycarbonate; and
(3) after weighing the pretreated polycarbonate, a graft copolymer prepared from an alkaline earth metal salt by using an emulsion polymerization method, a fire retardant, and other aids in proportion, blending by the high-speed mixer or a mixer, extruding, cooling by means of water, and pelletizing to obtain a columnar particulate polycarbonate composition, wherein the alkaline earth metal is selected from Mg and/or Ca.

## Patentansprüche

1. Polycarbonatzusammensetzung, umfassend die folgenden Komponenten in Gewichtsteilen:
a. 35-75 Teile des Polycarbonats;
b. 8-35 Teile des Propf-Copolymers;
c. 5-25 Teile des feuerhemmenden Stoffes; und
d. 0-10 Teile anderer Hilfsmittel;
worin eine Summe von Gewichtsteilen der vier Komponenten a, b, c und d 100 beträgt;
eine gesamte Mischungsmenge eines Übergangselementes und eines Erdalkalimetalles aufgrund eines Gesamtgewichts der Polycarbonatzusammensetzung größer als oder gleich 10 ppm ist und kleiner als oder gleich 600 ppm ist, worin der Gehalt des Übergangsmetalles und der Gehalt des Erdalkalimetalles wie in der Beschreibung angegeben gemessen werden, und ein Mischungsmolverhältnis des Übergangselementes zum Erdalkalimetall 0,1-1 beträgt.

2. Polycarbonatzusammensetzung nach Anspruch 1, worin die gesamte Mischungsmenge des Übergangselementes und des Erdalkalimetalles aufgrund eines Gesamtgewichts der Polycarbonatzusammensetzung größer als oder gleich 50 ppm ist und kleiner als oder gleich 500 ppm ist, vorzugsweise größer als oder gleich 70 ppm ist und kleiner als oder gleich 400 ppm ist.

3. Polycarbonatzusammensetzung nach Anspruch 1, worin das Mischungsmolverhältnis des Übergangselementes zum Erdalkalimetall 0,2-0,8 beträgt; vorzugsweise 0,3-0,6 beträgt.

4. Polycarbonatzusammensetzung nach einem der Ansprüche 1 bis 3, worin das Übergangselement aus Fe und/oder Mn ausgewählt ist; und das Erdalkalimetall aus Mg und/oder Ca ausgewählt ist.

5. Polycarbonatzusammensetzung nach Anspruch 1, worin das Polycarbonat aus einem oder mehreren von einem aromatischen Polycarbonat, einem aliphatischen Polycarbonat, einem aromatischaliphatischen Polycarbonat, einem verzweigten Polycarbonat und einem Siloxan-Copolycarbonat, vorzugsweise dem aromatischen Polycarbonat ausgewählt ist.

6. Polycarbonatzusammensetzung nach Anspruch 5, worin das aromatische Polycarbonat ein aromatisches Polycarbonat mit einem Viskositäts-Durchschnittsmolekulargewicht von 13000-40000, vorzugsweise ein aromatisches Polycarbonat mit einem Viskositäts-Durchschnittsmolekulargewicht von 16000-28000 ist, worin das Viskositäts-Durchschnittsmolekulargewicht wie in der Beschreibung angegeben bestimmt wird.

7. Polycarbonatzusammensetzung nach Anspruch 1, worin das Propf-Copolymer aus einem oder mehreren von einem Propf-Copolymer, das aus einem Erdalkalimetallsalz durch Verwendung eines Emulsionspolymerisationsverfahrens hergestellt wird, einem Propf-Copolymer, das aus einem Erdalkalimetallsalz durch Verwendung eines Massepolymerisationsverfahrens hergestellt wird, und einem Propf-Copolymer, das aus einem Erdalkalimetallsalz durch Verwendung eines Masse-Suspensionspolymerisationsverfahrens hergestellt wird, vorzugsweise dem Propf-Copolymer, das aus dem Erdalkalimetallsalz durch Verwendung des Emulsionspolymerisationsverfahrens hergestellt wird, ausgewählt ist.

8. Polycarbonatzusammensetzung nach Anspruch 1, worin das Propf-Copolymer aus Propf-Copolymeren ausgewählt ist, die die folgenden b.1 auf b.2 in Gewichtsteilen enthalten:
b.1 5-95 Teile einer Mischung von b.1.1 und b.1.2:
b.1.1 50-95 Teile aus einem oder mehreren von Styrol, Styrolderivaten wie α-Methylstyrol, p-Benzylstyrol und Divinylstyrol, einem C1-C8 Alkylmethacrylat, einem C1-C8 Alkylacrylat, Dimethylsiloxan, Phenylsiloxan und Multialkylsiloxan;
b.1.2 5-50 Teile aus einem oder mehreren von Acrylnitril, Methylacrylnitril, einem C1-C8 Alkylmethacrylat, und einem C1-C8 Alkylacrylat;
b.2 5-95 Teile aus einem oder mehreren von Polybutadien, Polyisopren, einem statistischen Copolymer und Block-Copolymer aus Styrol-Butadien, einem statistischen Copolymer und Block-Copolymer aus Acrylnitril-Butadien, einem Copolymer aus Polybutadien und Polyisopren, einem Copolymer aus Ethylen und α-Alken, einem Copolymer aus Ethylen und α-ungesättigtem Carboxylat, einem Terpolymer aus Ethylen-Propen-nicht-konjugiertem Dien, einem Acryloyl-Kautschuk, und einem organischen Siloxan-Kautschuk.

9. Polycarbonatzusammensetzung nach Anspruch 8, worin das Propf-Copolymer aus einem oder mehreren von einem Copolymer aus Acrylnitril-Styrol AS, einem Propf-Copolymer aus Acrylnitril-Butadien-Styrol ABS, einem Copolymer aus Methyl-Methacrylat-Acrylnitril-Butadien-Styrol MABS, einem Terpolymer aus Acrylnitril-Styrol-Propensäure ASA, und einem Propf-Copolymer aus Methyl-Methacrylat-Butadien-Styrol MBS, bevorzugt dem Propf-Copolymer aus Acrylnitril-Butadien-Styrol ABS ausgewählt ist; worin ein Partikeldurchmesser des MBS vorzugsweise 0,1 µm-0,5 µm ist, ein Partikeldurchmesser des ABS in einem Massepolymerisationsverfahren vorzugsweise 0,1 µm-2 µm ist, und ein Partikeldurchmesser des ABS in einem Emulsionspolymerisationsverfahren vorzugsweise 0,05 µm-0,2 µm ist.

10. Polycarbonatzusammensetzung nach Anspruch 1, worin der feuerhemmende Stoff aus einem oder mehreren von einem halogenbasierten feuerhemmenden Stoff oder einem halogenfreien feuerhemmenden Stoff, vorzugsweise dem halogenfreien feuerhemmenden Stoff ausgewählt ist; der halogenbasierte feuerhemmende Stoff aus einem oder mehreren von einem bromierten Polystyrol, einem bromierten Polyphenyl-Ether, einem bromierten Bisphenol-A-Typ-Epoxyharz, einem bromierten Styrol-Maleinsäureanhydrid-Copolymer, einem bromierten Epoxyharz, einem bromierten Phenoxyharz, Decabromodiphenyloxid, Decabromodiphenyl, einem bromierten Polycarbonat, Perbromotricyclopentadecan oder einem bromierten aromatischen quervernetzten Polymer, vorzugsweise dem bromierten Polystyrol ausgewählt ist; der halogenfreie feuerhemmende Stoff aus einem oder mehreren von einem stickstoffhaltigen feuerhemmenden Stoff, einem phosphorhaltigen feuerhemmenden Stoff, und einem stickstoff- und phosphorhaltigen feuerhemmenden Stoff, vorzugsweise dem phosphorhaltigen feuerhemmenden Stoff ausgewählt ist.

11. Polycarbonatzusammensetzung nach Anspruch 10, worin der phosphorhaltige feuerhemmende Stoff aus einem oder mehreren von Diphenylphosphat, Tritolylphosphat, Tolyldiphenylphosphat, Trixylylphosphat, Tri(2,4,6-Trimethylphenyl)-Phosphat, Tri(2,4-Di-Tert-Butylphenyl)-Phosphat, Tri(2,6-Di-Tert-Butylphenyl)-Phosphat, Resorcin Bis(Diphenylphosphat), Hydrochinon Bis(Diphenylphosphat), Bisphenol A-Bis(Diphenylphosphat), Resorcin Bis(2,6-Di-Tert-Butylphenylphosphat) und Hydrochinon Bis(2,6-Dimethylphenylphosphat) ausgewählt ist.

12. Polycarbonatzusammensetzung nach Anspruch 1, worin die anderen Hilfsmittel der Komponente d aus einem oder mehreren von einem Wärmestabilisator, einem Antioxydanten, einem Tropfverhinderungsmittel, einem Schmiermittel, einem Trennmittel, einem Lichtstabilisator, einem Weichmacher, einem Füllstoff und einem Farbstoff ausgewählt sind.

13. Herstellungsverfahren der Polycarbonatzusammensetzung nach einem der Ansprüche 1 bis 12, umfassend die folgenden Schritte:
(1) Formulieren einer Verbindung, die ein Übergangselement und ein Phenylsiloxan enthält, in eine Phenylsiloxan-Lösung mit einem Massenanteil von 0,15 ppm-600 ppm, worin das Übergangselement aus Fe und/oder Mn ausgewählt ist;
(2) Mischen der Phenylsiloxan-Lösung und eines Polycarbonats in einem Hochgeschwindigkeitsmischer, um ein vorbehandeltes Polycarbonat zu erhalten; und
(3) nach dem Wiegen des vorbehandelten Polycarbonats, eines Propf-Copolymers, das aus einem Erdalkalimetallsalz durch Verwendung eines Emulsionspolymerisationsverfahrens hergestellt wird, eines feuerhemmenden Stoffs und anderer Hilfsmittel im Verhältnis, Mischen durch den Hochgeschwindigkeitsmischer oder einen Mischer, Extrudieren, Kühlen durch Wasser und Pelletisieren, um eine Polycarbonatzusammensetzung säulenförmiger Teilchen zu erhalten, worin das Erdalkalimetall aus Mg und/oder Ca ausgewählt ist.

## Revendications

1. Composition de polycarbonate, comprenant les composants suivants en parties en poids :
a. de 35 à 75 parties de polycarbonate ;
b. de 8 à 35 parties du copolymère greffé ;
c. de 5 à 25 parties de l'agent ignifuge ; et
d. de 0 à 10 parties d'autres aditifs ;
dans laquelle une somme des parties en poids des quatre composants a, b, c et d est égale à 100 ;
une quantité de mélange totale d'un élément de transition et d'un métal alcalino-terreux sur la base du poids total de la composition de polycarbonate est supérieure ou égale à 10 ppm et inférieure ou égale à 600 ppm, dans laquelle la teneur du métal de transition et la teneur du métal alcalino-terreux sont mesurées comme indiqué dans la description, et un rapport molaire de mélange de l'élément de transition au métal alcalino-terreux est de 0,1-1.

2. Composition de polycarbonate selon la revendication 1, dans laquelle la quantité de mélange totale de l'élément de transition et du métal alcalino-terreux sur la base du poids total de la composition de polycarbonate est supérieure ou égale à 50 ppm et inférieure ou égale à 500 ppm, de préférence supérieure ou égale à 70 ppm et inférieure ou égale à 400 ppm.

3. Composition de polycarbonate selon la revendication 1, dans laquelle le rapport molaire de mélange de l'élément de transition au métal alcalino-terreux est de 0,2 à 0,8 ; de préférence de 0,3 à 0,6.

4. Composition de polycarbonate selon l'une quelconque des revendications 1 à 3, dans laquelle l'élément de transition est choisi parmi Fe et/ou Mn ; et le métal alcalino-terreux est choisi parmi Mg et/ou Ca.

5. Composition de polycarbonate selon la revendication 1, dans laquelle le polycarbonate est choisi parmi un ou plusieurs parmi un polycarbonate aromatique, un polycarbonate aliphatique, un polycarbonate aromatique-aliphatique, un polycarbonate ramifié et un copolycarbonate de siloxane, de préférence le polycarbonate aromatique.

6. Composition de polycarbonate selon la revendication 5, dans laquelle le polycarbonate aromatique est un polycarbonate aromatique ayant un poids moléculaire moyen en viscosité de 13 000 à 40 000, de préférence un polycarbonate aromatique ayant un poids moléculaire moyen en viscosité de 16 000 à 28 000, dans laquelle le poids moléculaire moyen en viscosité est déterminé comme indiqué dans la description.

7. Composition de polycarbonate selon la revendication 1, dans laquelle le copolymère greffé est choisi parmi un ou plusieurs parmi un copolymère greffé préparé à partir d'un sel de métal alcalino-terreux en utilisant un procédé de polymérisation en émulsion, un copolymère greffé préparé à partir d'un sel de métal alcalino-terreux en utilisant un procédé de polymérisation en masse, et un copolymère greffé préparé à partir d'un sel de métal alcalino-terreux en utilisant un procédé de polymérisation en suspension en masse, de préférence le copolymère greffé préparé à partir du sel de métal alcalino-terreux en utilisant le procédé de polymérisation en émulsion.

8. Composition de polycarbonate selon la revendication 1, dans laquelle le copolymère greffé est choisi parmi des copolymères greffés contenant les b.1 sur b.2 suivants en parties en poids :
b.1 de 5 à 95 parties d'un mélange de b.1.1 et b.1.2 :
b.1.1 de 50 à 95 parties d'un ou plusieurs parmi styrène, dérivés de styrène tels que α-méthylstyrène, p-benzylstyrène, et divinylstyrène, méthacrylate d'alkyle en C1-C8, acrylate d'alkyle en C1-C8, diméthylsiloxane, phénylsiloxane, et polyalkylsiloxane ;
b.1.2 de 5 à 50 parties d'un ou de plusieurs parmi acrylonitrile, acrylonitrile de méthyle, méthacrylate d'alkyle en C1-C8 et acrylate d'alkyle en C1-C8 ;
b.2 de 5 à 95 parties d'un ou plusieurs parmi le polybutadiène, le polyisoprène, un copolymère statistique et un copolymère séquencé de styrène-butadiène, un copolymère statistique et un copolymère séquencé d'acrylonitrile-butadiène, un copolymère de polybutadiène et de polyisoprène, un copolymère d'éthylène et d'α-alcène, un copolymère d'éthylène et d'un carboxylate α-insaturé, un terpolymère d'éthylène-propène-diène non conjugué, un caoutchouc d'acryloyle et un caoutchouc de siloxane organique.

9. Composition de polycarbonate selon la revendication 8, dans laquelle le copolymère greffé est choisi parmi un ou plusieurs parmi un copolymère d'acrylonitrile-styrène, AS, un copolymère greffé d'acrylonitrile-butadiène-styrène ABS, un copolymère de méthacrylate de méthyle-acrylonitrile-butadiène-styrène MABS, un terpolymère d'acrylonitrile-styrène-acide propénoïque ASA, et un copolymère greffé de méthacrylate de méthyle-butadiène-styrène MBS, de préférence le copolymère greffé d'acrylonitrile-butadiène-styrène ABS ; dans laquelle un diamètre de particule du MBS est de préférence de 0,1 µm à 0,5 µm, un diamètre de particule de l'ABS dans un procédé de polymérisation en masse est de préférence de 0,1 µm à 2 µm, et un diamètre de particule de l'ABS dans un procédé de polymérisation en émulsion est de préférence de 0,05 µm à 0,2 µm.

10. Composition de polycarbonate selon la revendication 1, dans laquelle l'agent ignifuge est choisi parmi un ou plusieurs parmi un agent ignifuge à base d'halogène ou un agent ignifuge sans halogène, de préférence l'agent ignifuge sans halogène ; l'agent ignifuge à base d'halogène est choisi parmi un ou plusieurs parmi un polystyrène bromé, un polyphényléther bromé, une résine époxy de type bisphénol A bromée, un copolymère styrène bromé-anhydride maléique, une résine époxy bromée, une résine phénoxy bromée, l'oxyde de décabromodiphényle, le décabromodiphényle, un polycarbonate bromé, le perbromotricyclopentadécane ou un polymère réticulé aromatique bromé, de préférence le polystyrène bromé ; l'agent ignifuge sans halogène est choisi parmi un ou plusieurs parmi un agent ignifuge contenant de l'azote, un agent ignifuge contenant du phosphore et un agent ignifuge contenant de l'azote et du phosphore, de préférence l'agent ignifuge contenant du phosphore.

11. Composition de polycarbonate selon la revendication 10, dans laquelle l'agent ignifuge contenant du phosphore est choisi parmi un ou plusieurs parmi le phosphate de diphényle, le phosphate de tritolyle, le phosphate de tolyldiphényle, le phosphate de trixylyle, le phosphate de tri(2,4,6-triméthylphényl), le phosphate de tri(2,4-di-tert-butylphényl), le phosphate de tri(2,6-di-tert-butylphényl), le bis(diphénylphosphate) de résorcinol, le bis(diphénylphosphate) d'hydroquinone, le bisphénol A-bis(diphénylphosphate), le bis(2,6-di-tert-butylphénylphosphate) de résorcinol et le bis(2,6-diméthylphénylphosphate) d'hydroquinone.

12. Composition de polycarbonate selon la revendication 1, dans laquelle d'autres additifs du composant d sont choisis parmi un ou plusieurs parmi un stabilisant thermique, un antioxydant, un agent anti-goutte, un lubrifiant, un agent de libération, un stabilisateur de lumière, un plastifiant, une charge, et un colorant.

13. Procédé de préparation de la composition de polycarbonate selon l'une quelconque des revendications 1 à 12, comprenant les étapes suivantes consistant à :
(1) formuler un composé contenant un élément de transition et un phénylsiloxane en une solution de phénylsiloxane d'une fraction massique de 0,15 ppm à 600 ppm, dans lequel l'élément de transition est choisi parmi Fe et/ou Mn ;
(2) mélanger la solution de phénylsiloxane et un polycarbonate dans un mélangeur à grande vitesse pour obtenir un polycarbonate prétraité ; et
(3) après avoir pesé le polycarbonate prétraité, un copolymère greffé préparé à partir d'un sel de métal alcalino-terreux en utilisant un procédé de polymérisation en émulsion, un agent ignifuge et d'autres additifs en proportion, mélanger via le mélangeur à grande vitesse ou un mélangeur, extruder, refroidir au moyen d'eau, et pastiller pour obtenir une composition de polycarbonate particulaire colonnaire, dans lequel le métal alcalino-terreux est choisi parmi Mg et/ou Ca.
